# EUROPEAN PATENT SPECIFICATION

(11) **EP 1 320 714 B1**
(45) Date of publication and mention of the grant of the patent: **02.06.2004**
(21) Application number: 00970298.6
(22) Date of filing: 22.09.2000
(51) Int. Cl.: F28D 13/00

(54) **APPARATUS FOR CARRYING OUT A PHYSICAL AND/OR CHEMICAL PROCESS, SUCH AS A HEAT EXCHANGER**
VORRICHTUNG ZUR DURCHFÜHRUNG VON PHYSIKALISCHEN UND/ODER CHEMISCHEN VERFAHREN, ZUM BEISPIEL EIN WÄRMETAUSCHER
APPAREIL SIMILAIRE A UN ECHANGEUR DE CHALEUR SERVANT A REALISER UN PROCESSUS PHYSIQUE ET/OU CHIMIQUE

(43) Date of publication of application: 25.06.2003
(73) Proprietor: Klarex Beheer B.V., 3862 CG Nijkerk (NL)
(72) Inventor: KLAREN, Dick, Gerrit, NL-2182 LP Hillegom (NL)
(74) Representative: Prins, Adrianus Willem, Mr. Ir.
(86) International application number: PCT/NL2000/000677
(87) International publication number: WO 2002/025199

(56) References cited:
- EP-A- 0 851 188
- WO-A-94/24507
- DE-A- 3 939 028
- FR-A- 1 322 236

## Description

This invention relates to an apparatus for carrying out a physical and/or chemical process, such as a heat exchanger, comprising a reservoir provided with upwardly directed tubes, which tubes are accommodated, at top and bottom ends thereof, in tube plates and are in open communication with a top box and a bottom box, in which bottom box at least one distribution plate is arranged for supporting a fluidized bed of granular material, which is maintainable in a quasi-stationary, fluidized condition by a medium to be treated or heated, fed via the bottom box and flowing through the tubes, which apparatus further comprises a downcomer, placed outside the reservoir, for feeding granular material separated from the medium back to the bottom box.

Such apparatus is known from WO 94/24507. In the known apparatus, the external downcomer placed outside the reservoir is connected at a top end with the top box via a separator, designed as a cyclone, for separating granular material from the medium. At a bottom end, the downcomer is communicable, through switching on and off, with the bottom box of the reservoir.

A variant of the above apparatus, which is particularly suitable for processing a medium of high viscosity and/or a large volume flow of medium is described in WO 94/24508. In this apparatus, the bottom box is provided with a divided feed of medium, so that a part of the medium is fed above the fluidized bed, as a result of which the fluidized bed can be stable and sufficiently dense. In this variant, the tubes are provided with run-in pieces, extending into the bottom box, with inflow openings, arranged in the tube walls, for increasing the inflow of medium.

DE 39 39 028 describes a fluidized bed type heat exchanger with an internal downcomer to enhance fluidization of the bed in the top box. The ends of the tubes extending into the top box are provided with run-out pieces with separation openings.

EP 0 851 188 decribes a transfer tube of a condenser that is provided with through-holes for drainage.

FR 1 322 236 describes a cooler without fluidized bed of which the tubes extend through an intermediate reservoir. The tubes are provided with perforated walls to allow inflow of auxiliary liquid into the tubes.

In the apparatuses known from WO94/24507 and WO94/24508, the total amount of flowing medium with fluidized bed particles included therein therefore flows from the vertical tubes of the reservoir via the top box to the separator, designed as a cyclone, in which the granular material, also called fluidized bed particles, is separated from the medium.

A drawback of this arrangement is that the cyclone, in particular with large throughputs of flowing medium, can assume a considerable dimension, and that the walls of the separator and the communication line between the separator and the top box must be protected against wear through the fluidized bed particles present in the flowing medium. The making of arrangements against wear for such a relatively large cyclone separator can be very expensive, in particular when the flowing medium is also corrosive.

Furthermore, since the separator must be located at about the same height as the top box, the large cyclone separator must be supported separately. Since the reservoir with the top box often reaches a considerable height, the support is often relatively complicated and expensive.

The object of the invention is to provide an apparatus of the type mentioned in the opening paragraph, in which the above drawbacks are removed. According to the invention, the tubes between the reservoir and the top box are provided with run-out pieces with separation openings, provided in the tube wall, for separating a partial flow of medium therethrough from the tubes. By using the run-out pieces, provided with separation openings, between the reservoir and the top box, a partial flow of medium can be separated, so that the flow velocity of the medium in the top box is reduced, while, through screen action of the separation openings, the residual flow of medium entering the top box from the run-out pieces may have a relatively high concentration of fluidized bed particles. As a result thereof, the cyclone separator can be of substantially smaller design or, as will be explained hereinafter, be omitted. The cyclone separator, through its relatively small dimensions, can be integrated with the top box and/or the top end of the downcomer. As a result thereof, a separate supporting structure can be avoided.

According to the invention, a substantial part of the volume flow of flowing medium in the risers is withdrawn from the risers via the separation openings in the run-out pieces. The remaining volume flow of flowing medium containing the fluidized bed particles leave the run-out pieces at the top end and flow into the top box. Because of the relatively low flow velocity of the medium and the relatively high concentration of fluidized bed particles, the cyclone can be of substantially smaller and therefore less expensive design. Furthermore, the cyclone separator can now even be accommodated in the top box, as a result of which no separate supporting structure needs to be built. Furthermore, it is possible to build up in the top box a stable and dense fluidized bed.

The separation openings may be slot-shaped, but are preferably designed as holes with a substantially round or oval form.

By selecting the smallest diameter of the separation openings to be smaller than the smallest diameter of the granular material, it can be ensured that the separated partial flow of medium contains no granular material.

It is observed that when the granular material comprises elongated, chopped thread particles, the risk of separation of the thread particles is always low if the smallest diameter of the separation opening is smaller than the length of the thread particle. Furthermore, the risk of separation of a particle of granular material can be reduced if the separation openings are, at least partly, directed downward. As used in this context, an at least partly downwardly directed outflow opening is an outflow opening directed such that the medium flowing out of the outflow opening is, to a greater or lesser degree, directed downward with respect to the horizontal. Such a downwardly directed outflow opening may e.g. be formed by inserting a pin in the separation opening and bending the material of the tube wall around the separation opening in a movement directed towards the reservoir. As a result thereof, the tube wall obtains a rasp-shaped surface, with each time an upper edge of the separation opening, in the radial direction, being located farther outwards than a lower part of the outflow opening.

Advantageously, the run-out pieces extend through an intermediate reservoir, located between the reservoir and the top box, with a discharge for discharging the separated medium from the intermediate reservoir. Such an intermediate reservoir can substantially simplify the structure of the apparatus and can *e*.*g*. be elegantly formed between two tube plates, between which the run-out pieces of the tubes are accommodated. The reservoir and the intermediate reservoir may then have a common outer surface.

Advantageously, the discharge of the intermediate reservoir may be connected with an upper part of the top box. Such a discharge may be internally provided in the apparatus, but may also be provided externally. Optionally, the discharge may be provided with a separator for separating particles separated with the partial flow of medium.

Depending on the throughput, the viscosity of the medium and the type of granular material, it is possible through the reduced flow velocity of the medium to separate, in the top box of the medium, the granular material from the medium under the action of gravity. In such a case, the top box may be provided with a first discharge for discharging the granular material under the action of a pressure difference over the discharge with a partial flow of medium to the downcomer and with a second discharge, located downstream in the direction of flow of the medium, viewed through the top box, for discharging a main flow of medium without granular material. Preferably, the top box between the first and the second discharge is provided with means for generating a pressure difference, in particular a distribution plate.

The invention also relates to a method for carrying out a chemical and/or physical process. Further advantageous embodiments are defined in the subclaims.

The manner of feeding flowing medium to the bottom box of the apparatus and feeding particles of granular material back to the bottom box via the downcomer is already known to those skilled in the art and may be carried out in many ways, *e.g.* as described in WO94/24507 and WO94/24508.

The invention will now be explained in more detail with reference to an exemplary embodiment shown in the drawing. In the drawing:
Fig. 1 is a diagrammatic cross-section of a heat exchanger according to the invention, with a top box with divided discharge and integrated expansion space as separator;
Fig. 2 is a diagrammatic cross-section of the upper part of the heat exchanger of Fig. 1 with an internal discharge line for discharging a main flow of separated medium from an intermediate reservoir to an upper part of the top box;
Fig. 3 is a diagrammatic cross-section of an upper part of a heat exchanger according to the invention, in which a cyclone separator is integrated into the top box; and
Fig. 4 is a diagrammatic cross-section of a heat exchanger according to the invention, in which a cyclone separator is integrated with a top end of the downcomer.

The figures only relate to diagrammatic representations of preferred embodiments of the invention. In the figures, similar or corresponding parts are indicated by the same reference numerals.

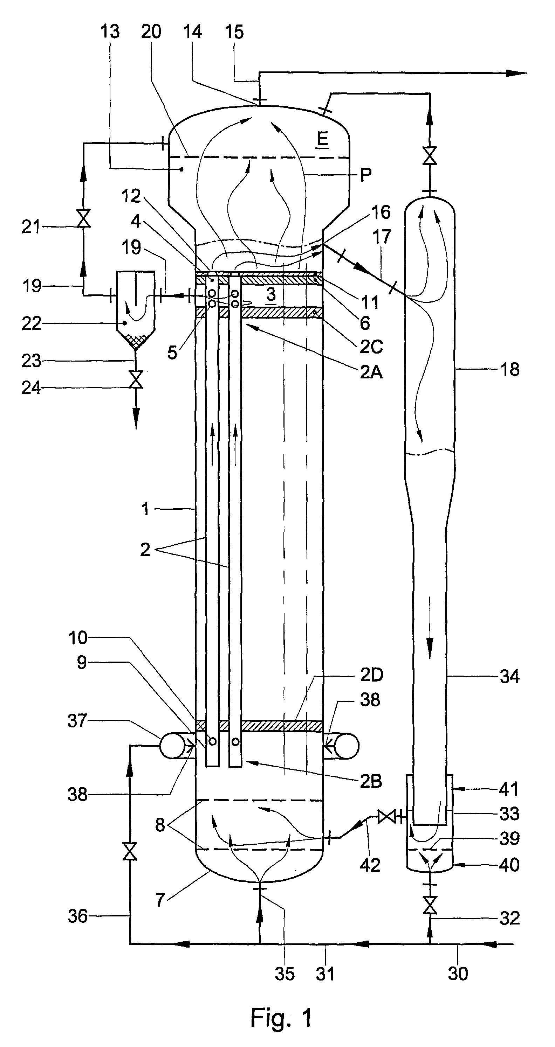

Fig. 1 shows a heat exchanger, comprising a reservoir 1, in which a series of risers 2 are provided, which are accommodated at the top end 2A and the bottom end 2B in upper and lower tube plates 2C, 2D. Located above the upper tube plate 2C is an intermediate reservoir 3, through which run-out pieces 4 of the risers 2 extend. The run-out pieces 4 are provided with separation openings 5 provided in the tube wall. The run-out pieces 4 are accommodated at an upper end in an end plate 6. Located below the lower tube plate 2D is a bottom box 7, in which one or more distribution plates 8 are arranged for supporting a fluidized bed of granular material, e.g. chopped thread.

The risers 2 are provided at the bottom end 2B with run-in pieces 9 with inflow openings 10 provided in the tube wall. Arranged above or at a short distance from the end plate 6 is a throttling plate 11. The throttling plate is provided with openings 12, which are in register with the openings of the run-out pieces 4, and which have a diameter smaller than the internal diameter of the run-out pieces 4. Located above the end plate 6 is a top box 13. The top box 13 is provided with a first opening 16, to which a first discharge 17 is connected for discharging material separated in the top box 13 with a partial flow of medium to an external downcomer 18. Located above the first opening 16, that is to say downstream in the upward direction of flow P of the medium through the top box, is a second opening 14, to which a second discharge 15 is connected for discharging a main flow of medium without granular material.

The medium to be treated or heated is fed to the heat exchanger via a line 30, which divides into a line 31 for feeding medium to the bottom box 7 and a line 32 to a collecting reservoir 33, which is located at the bottom end 34 of an external downcomer 18 for recirculating fluidized bed particles. A part of the feed of flowing medium to the bottom box takes place via line 35, which discharges below the distribution plates 8. Another part of the flowing medium is fed to the bottom box via bypass line 36, which is connected with a ring line 37 via several points of connection 38 above the fluidized bed. Thus, a sufficiently heavy and filled fluidized bed can be realized above the distribution plates at a high volume flow and/or a medium of high viscosity. In spite of the high volume flow and the attendant relatively high velocities in the tubes, a proper distribution of fluidized bed particles and flowing medium over all the tubes 2 can yet be realized.

The collecting reservoir 33 is divided by means of a distribution plate 39 into a bottom section 40 and a top section 41. The distribution plate 39 serves for supporting the fluidized bed particles fed via the external downcomer 18. The top section 41 is connected via one or more lines 42 to the bottom box 7 for feeding back the fluidized bed particles from the collecting reservoir 33. The lines 30, 32, 36 and 42 may be provided with regulating or shut-off valves.

According to the invention, the relatively high velocity of the flowing medium in the tubes 2 is reduced just before reaching the top box 13, because a partial flow of the flowing medium is discharged from the tubes 2 via the openings 5 in the wall of the run-out pieces 4 to the intermediate reservoir 3 located around the run-out pieces 4. As a result of the screen action of the openings 5 in the wall, the risk of separation of granular material through the tube wall is low, so that the partial flow substantially comprises flowing medium.

If the separation openings 5 are selected to be sufficiently small with respect to the sizes of the particles of granular material, the partial flow separated via the wall of the run-out pieces can even be free from particles. The partial flow separated via the tube wall then flows from the intermediate reservoir 3 via one or more bypass lines 19 to a space with a lower pressure. In this exemplary embodiment, the bypass line 19 is connected with the top box 13, so that the partial flow coincides with the main flow of medium, which exits via the end of the run-out pieces 14. In this exemplary embodiment, the partial flow of flowing medium is rendered possible by the pressure difference as a result of the throttling of the main flow in the openings 12 of the throttling plate 11, the pressure difference in the top box as a result of the fluidized bed of fluidized particles, which forms directly above the throttling plate 11 in the top box 13, and the pressure difference as a result of a distribution plate 20, provided with holes, in the top box. Depending on the size of the plate 20, a greater or smaller pressure difference can be realized, a great pressure difference causing a larger partial flow. The partial flow may then be adjusted by including a regulating valve 21 in the line 19.

Instead of using a plate 20, a pressure difference may also be realized by connecting the bypass line 19 to the second discharge line 15. In such a case, the pressure difference is caused by the entrance loss in the second opening 14 and the line resistance of the passed part of the bypass line 19. Of course, the bypass line 19 may also be connected to another part of the plant where a relatively low pressure prevails.

Via the ends of the run-out pieces 4, a flow of medium now enters the top box 13 at a relatively low velocity, which top box contains a relatively high concentration of fluidized bed particles. As a result thereof, a stable fluidized bed of sufficient density forms above the throttling plate 11.

In the outlet box 13, a division of the discharge of flowing medium takes place. The largest amount of flowing medium, the main flow, flows through the outlet box 13 substantially in the upward direction P and is discharged via opening 14 and the second discharge line 15. A much smaller amount of flowing medium, the partial flow containing separated fluidized bed particles, is discharged from the outlet box 13 substantially sidewards via opening 16 and the first discharge line 17 to the top end of the external downcomer 18. To prevent the main flow of flowing medium from entraining fluidized bed particles from the outlet box 13, the outlet box is, in this exemplary embodiment, provided with an integrated expansion space E. At the location of the expansion space, the top box 13 has a greater diameter than the reservoir 1. The top box 13 with expansion space E is, as discussed, further provided with a distribution plate 20 provided with holes, such that the velocity of the flowing medium in the upward direction P, in at least an upper part of the top box, is lower than the fall velocity of fluidized bed particles because of gravity. As a result thereof, the fluidized bed particles can be separated from the medium under the action of gravity.

To separate a large flow of medium via the tube walls of the run-out pieces 4, it may be desirable to select the separation openings 5 to be larger than the fluidized bed particles. By deforming the separation openings with a pin, so that each time an upper edge of the separation opening is, in the radial direction, located farther outwards than a lower part of the outflow opening, the outflow opening can be directed slightly downwards, thereby reducing the risk of separation of fluidized bed particles. Particles that can yet pass through the openings can be separated in a separator 22 included in the line 19. From the separator 22, the collected fluidized bed particles can be discharged by means of a line 23 provided with a shut-off valve 24.

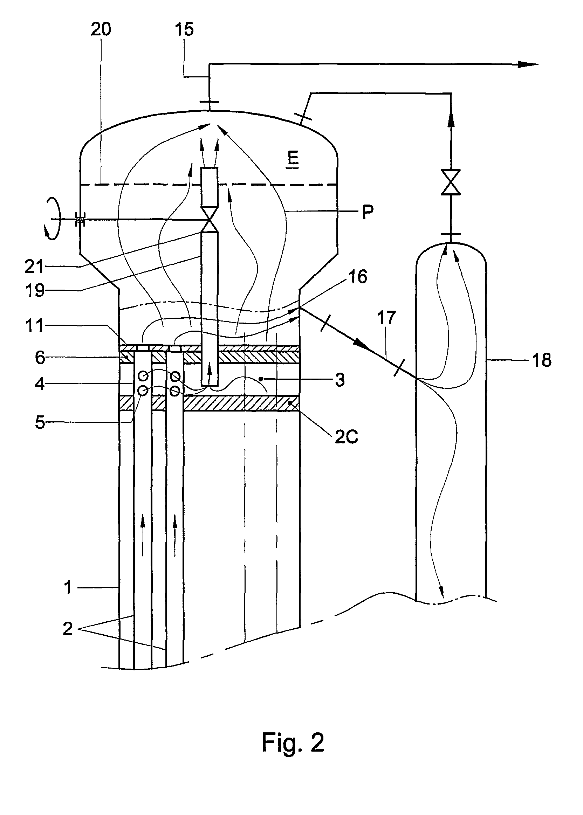

Referring to Fig. 2, the discharge of the partial flow of flowing medium from the intermediate reservoir 3 can be realized by means of a bypass line 19 located inside the top box 13. Preferably, the separation openings 5 in the run-out pieces 4 are smaller than the fluidized bed particles. The bypass line 19 connects to reservoir 3 and extends via a passage through the end plate 6 and the throttling plate 11. The volume flow through the bypass line 19 can be regulated by placing a regulating valve 21 in the bypass line 19, which, by means of a transmission device, can be operated from outside the apparatus. Of course, a fixed flow resistance may also be included in the bypass line 19.

The fluidized bed particles may also be separated from the medium in a conventional manner by means of a cyclone separator. The flow velocity of the medium flowing into the top box 13 via the ends of the run-out pieces 4 is relatively low, while the concentration of fluidized bed particles is relatively high, so that the size of a cyclone separator can be selected to be relatively small.

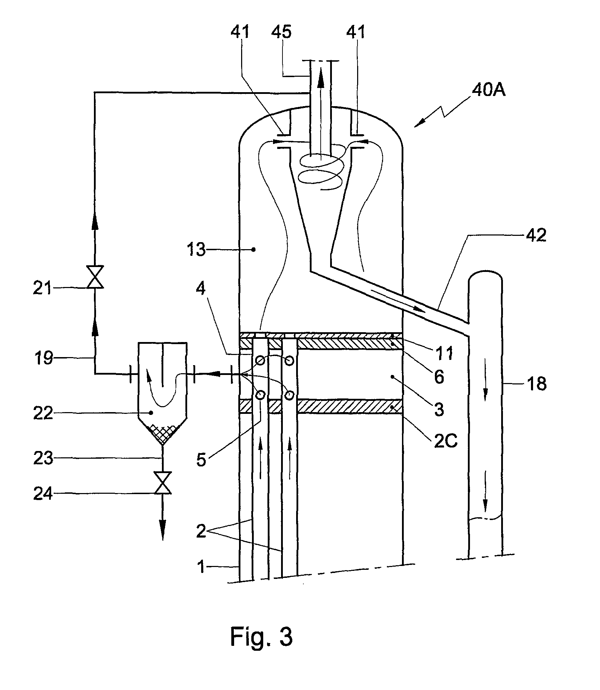

Referring to Fig. 3, it is possible to include a cyclone separator 40a in the top box 13. The medium with the fluidized bed particles enters the cyclone separator 40a via inflow openings 41 and is separated in the cyclone separator 40 into a main flow of flowing medium, connected with the first discharge line 45. A partial flow of medium containing the separated fluidized bed particles is discharged by means of the first discharge 42 to the top end of the external downcomer 18.

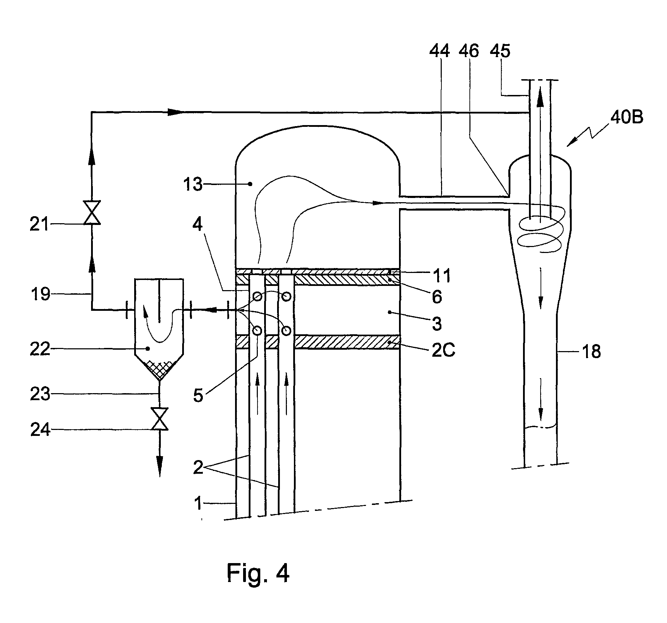

Referring to Fig. 4, a cyclone separator 40b may also be integrated with the top end of the external downcomer 18. In such a case, the top box 13 is provided with a discharge line 44 for discharging from the top box 13 a non-divided flow of medium, in which the fluidized bed particles are included. This flow is then fed via entrance opening 46 to the cyclone separator 40b, after which the main flow of medium leaves the cyclone separator 40b without granular material via discharge 45 and the separated material falls down to a lower part of the downcomer 18 under the action of gravity.

It may be clear that the invention is not limited to the preferred embodiment shown herein. Many embodiments are possible within the scope of the invention as defined in the appended claims.

## Claims

1. An apparatus for carrying out a physical and/or chemical process, such as a heat exchanger, comprising a reservoir (1) provided with upwardly directed tubes (2), which tubes (2) are accommodated, at top and bottom ends (2A, 2B) thereof, in tube plates (2C, 2D) and are in open communication with a top box (13) and a bottom box (7), in which bottom box (7) at least one distribution plate (8) is arranged for supporting a fluidized bed of granular material, which is maintainable in a quasi-stationary, fluidized condition by a medium to be treated or heated, fed via the bottom box (7) and flowing through the tubes (2), which apparatus further comprises a downcomer (18), placed outside the reservoir, for feeding granular material separated from the medium back to the bottom box (7), **characterized in that** at least part of the tubes (2) between the reservoir (1) and the top box (13) are provided with run-out pieces (4) with separation openings (5), provided in the tube wall, for separating therethrough a partial flow of medium.

2. An apparatus according to claim 1, wherein the smallest diameter of the separation opening (5) is smaller than the smallest diameter of the particles of the granular material.

3. An apparatus according to claim 1, wherein the smallest diameter of the separation opening (5) is smaller than the length of the particles of the granular material.

4. An apparatus according to any one of the preceding claims, wherein the outflow opening (5) is, at least partly, directed downwards.

5. An apparatus according to any one of the preceding claims, wherein the run-out pieces extend through an intermediate reservoir (3), located between the reservoir (1) and the top box (13), with a discharge (19) for discharging the separated medium from the intermediate reservoir.

6. An apparatus according to claim 5, wherein the discharge (19) for discharging the separated medium from the intermediate reservoir (3) is connected with the top box (13).

7. An apparatus according to claim 6, wherein the discharge (19) for discharging medium separated from the intermediate reservoir (3) is provided with a separator (22) for separating granular material from the medium.

8. An apparatus according to any one of the preceding claims 5-7, wherein the discharge (19) for discharging medium separated from the intermediate reservoir extends inside the top box.

9. An apparatus according to any one of the preceding claims, wherein the apparatus comprises an expansion space (E), integrated with the top box (13), for separating the granular material from the medium by reducing the flow velocity of the medium under the action of gravity, and wherein the top box (13) is provided with a first discharge (17) for discharging the separated granular material with a partial flow of medium to the downcomer (18), and with a second discharge (15), located downstream in the direction (P) of flow of the medium, viewed through the top box (13), for discharging a main flow of medium without granular material.

10. An apparatus according to claim 9, wherein the top box (13) is provided, between the first (17) and the second discharge (15), with means for generating a pressure difference, in particular a distribution plate (20).

11. An apparatus according to any one of the preceding claims, wherein the apparatus comprises a cyclone separator integrated with the top box (13).

12. An apparatus according to any one of the preceding claims, wherein the apparatus comprises a cyclone separator provided in an upper part of the downcomer (18).

13. A method for carrying out a physical and/or chemical process, wherein, by means of a medium to be treated, a fluidized bed is flowed through, and wherein the medium is then passed via a tube bank in upward direction through a reservoir, **characterized in that** after passing the reservoir, a partial flow of medium is separated through the side walls of the tubes, while the granular material is discharged via the tube bank with a residual flow of medium.

## Patentansprüche

1. Vorrichtung zum Durchführen eines physikalischen und/oder chemischen Prozesses, beispielsweise ein Wärmetauscher, mit einem Tank (1), der mit aufwärts gerichteten Rohren (2) versehen ist, welche an ihren oberen und unteren Enden (2A, 2B) in Rohrplatten (2C, 2D) aufgenommen sind und in offener Verbindung mit einem oberen Behälter (13) und einem unteren Behälter (7) stehen, wobei in dem unteren Behälter (7) wenigstens eine Verteilerplatte (8) zum Tragen eines fluidisierten Betts aus granularem Material angeordnet ist, welches durch ein über den unteren Behälter (7) zugeführtes und durch die Rohre (2) fließendes zu bearbeitendes oder zu erwärmendes Medium in einem quasi-stationären, fluidisierten Zustand gehalten werden kann, wobei die Vorrichtung ferner ein Rücklaufrohr (18) aufweist, das außerhalb des Tanks angeordnet ist, um vom Medium getrenntes granulares Material in den unteren Behälter (7) zurückzuführen, **dadurch gekennzeichnet, daß** wenigstens ein Teil der Rohre (9) zwischen dem Tank (1) und dem oberen Behälter (13) Auslaufteile (4) mit in der Rohrwand ausgebildeten Separationsöffnungen (5) versehen ist, um durch diese einen Teilstrom des Mediums abzutrennen.

2. Vorrichtung nach Anspruch 1, bei der der kleinste Durchmesser der Separationsöffnung (5) kleiner als der kleinste Durchmesser der Partikel des granularen Materials ist.

3. Vorrichtung nach Anspruch 1, bei der der kleinste Durchmesser der Separationsöffnung (5) kleiner als die Länge der Partikel des granularen Materials ist.

4. Vorrichtung nach einem der vorhergehenden Ansprüche, bei der die Auslauföffnung (5) wenigstens teilweise nach unten gerichtet ist.

5. Vorrichtung nach einem der vorhergehenden Ansprüche, bei der die Auslaufteile sich durch einen zwischen dem Tank (1) und dem oberen Behälter (13) befindlichen Zwischentank (3) erstrecken, der einen Auslaß (19) zum Auslassen des abgetrennten Mediums aus dem Zwischentank aufweist.

6. Vorrichtung nach Anspruch 5, bei der der Auslaß (19) zum Auslassen des abgetrennten Mediums aus dem Zwischentank (3) mit dem oberen Behälter (13) verbunden ist.

7. Vorrichtung mach Anspruch 6, bei der der Auslaß (19) zum Auslassen von abgetrenntem Medium aus dem Zwischentank (3) mit einem Separator (22) zum Abscheiden von granularem Material aus dem Medium versehen ist.

8. Vorrichtung nach einem der vorhergehenden Ansprüche 5-7, bei der der Auslaß (19) zum Auslassen von abgetrenntem Medium aus dem Zwischentank sich in den oberen Behälter erstreckt.

9. Vorrichtung nach einem der vorhergehenden Ansprüche, bei der die Vorrichtung einen in dem oberen Behälter (13) integrierten Ausdehnungsraum (E) aufweist, um das granulare Material vom Medium durch Verringern der Fließgeschwindigkeit des Mediums unter Schwerkrafteinwirkung zu trennen, und wobei der obere Behälter (13) mit einem ersten Auslaß (17) zum Auslassen des abgetrennten granularen Materials mittels eines Teilstroms des Mediums an das Rücklaufrohr (18) und mit einem zweiten Auslaß (15) versehen ist, der durch den oberen Behälter (13) gesehen in Fließrichtung (P) des Mediums stromabwärts angeordnet ist, um den Hauptstrom des Mediums ohne granulares Material abzulassen.

10. Vorrichtung nach Anspruch 9, bei der der obere Behälter (13) zwischen dem ersten (17) und dem zweiten Auslaß (15) mit einer Einrichtung zum Erzeugen eines Druckdifferenz, insbesondere einer Verteilerplatte (20), versehen ist.

11. Vorrichtung nach einem der vorhergehenden Ansprüche, bei der die Vorrichtung einen in den oberen Behälter (13) integrierten Zyklonabscheider aufweist.

12. Vorrichtung nach einem der vorhergehenden Ansprüche, bei der die Vorrichtung einen in einem oberen Teil des Rücklaufrohrs (18) vorgesehenen Zyklonabscheider aufweist.

13. Verfahren zum Durchführen eines physikalischen und/oder chemischen Prozesses, bei dem mittels eines zu behandelnden Mediums ein fluidisiertes Bett durchströmt wird, und bei dem das Medium anschließend über ein Rohrbündel nach oben durch einen Tank geleitet wird, **dadurch gekennzeichnet, daß** nach dem Durchlaufen des Tanks ein Teilstrom des Mediums durch die Seitenwände der Rohre abgetrennt wird, während das granulare Material über das Rohrbündel mittels eines Reststroms des Mediums abgelassen wird.

## Revendications

1. Appareil pour réaliser un traitement physique et/ou chimique, tel qu'un échangeur thermique, comprenant un réservoir (1) pourvu de tubes orientés vers le haut (2), lesquels tubes (2) sont logés, aux extrémités supérieure et inférieure (2A, 2B) de ceux-ci, dans des plaques tubulaires (2C, 2D) et sont en communication ouverte avec un boîtier supérieur (13) et un boîtier inférieur (7), dans lequel boîtier inférieur (7) est agencée au moins une plaque de distribution (8) pour supporter un lit fluidisé de matière granulaire, qui peut être maintenu dans un état fluidisé quasi-stationnaire par un milieu devant être traité ou chauffé, fourni par le biais du boîtier inférieur (7) et s'écoulant à travers les tubes (2), lequel appareil comprend en outre un tuyau de descente (18), placé à l'extérieur du réservoir, pour réacheminer une matière granulaire séparée du milieu vers le boîtier inférieur (7), **caractérisé en ce qu'**au moins une partie des tubes (2) entre le réservoir (1) et le boîtier supérieur (13) sont pourvus de pièces de sortie (4) avec des ouvertures de séparation (5), prévues dans la paroi du tube, pour séparer à travers elles un écoulement partiel du milieu.

2. Appareil selon la revendication 1, dans lequel le plus petit diamètre de l'ouverture de séparation (5) est inférieur au plus petit diamètre des particules de la matière granulaire.

3. Appareil selon la revendication 1, dans lequel le diamètre le plus petit de l'ouverture de séparation (5) est inférieur à la longueur des particules de la matière granulaire.

4. Appareil selon l'une quelconque des revendications précédentes, dans lequel l'ouverture d'écoulement (5) est au moins en partie dirigée vers le bas.

5. Appareil selon l'une quelconque des revendications précédentes, dans lequel les pièces de sortie s'étendent à travers un réservoir intermédiaire (3), situé entre le réservoir (1) et le boîtier supérieur (13), avec une évacuation (19) pour évacuer le milieu séparé du réservoir intermédiaire.

6. Appareil selon la revendication 5, dans lequel l'évacuation (19) pour évacuer le milieu séparé du réservoir intermédiaire (3) est raccordée au boîtier supérieur (13).

7. Appareil selon la revendication 6, dans lequel l'évacuation (19) pour évacuer le milieu séparé du réservoir intermédiaire (3) est pourvue d'un séparateur (22) pour séparer la matière granulaire du milieu.

8. Appareil selon l'une quelconque des revendications précédentes 5-7, dans lequel l'évacuation (19) pour évacuer le milieu séparé du réservoir intermédiaire s'étend à l'intérieur du boîtier supérieur.

9. Appareil selon l'une quelconque des revendications précédentes, dans lequel l'appareil comprend un espace de dilatation (E), d'un seul tenant avec le boîtier supérieur (13), pour séparer la matière granulaire du milieu en réduisant la vitesse d'écoulement du milieu sous l'action de la gravité, et dans lequel le boîtier supérieur (13) est pourvu d'une première évacuation (17) pour évacuer la matière granulaire séparée avec un écoulement partiel de milieu vers le tuyau de descente (18), et d'une seconde évacuation (15), située en aval dans la direction (P) de l'écoulement du milieu, vue à travers le boîtier supérieur (13), pour évacuer un écoulement principal de milieu sans matière granulaire.

10. Appareil selon la revendication 9, dans lequel le boîtier supérieur (13) est pourvu, entre la première (17) et la seconde évacuation (15), de moyens pour générer une pression différentielle, en particulier une plaque de distribution (20).

11. Appareil selon l'une quelconque des revendications précédentes, dans lequel l'appareil comprend un séparateur à cyclone d'un seul tenant avec le boîtier supérieur (13).

12. Appareil selon l'une quelconque des revendications précédentes, dans lequel l'appareil comprend un séparateur à cyclone situé sur une partie supérieure du tuyau de descente (18).

13. Procédé pour effectuer un traitement physique et/ou chimique, dans lequel, au moyen d'un milieu devant être traité, s'écoule un lit fluidisé, et dans lequel le milieu est ensuite passé par le biais d'un faisceau de tubes dans une direction ascendante à travers un réservoir, **caractérisé en ce que**, après passage dans le réservoir, un écoulement partiel de milieu est séparé à travers les parois latérales des tubes, alors que la matière granulaire est évacuée par le biais du faisceau de tubes avec un écoulement de milieu résiduel.
